# EUROPEAN PATENT SPECIFICATION

(11) **EP 4 255 794 B1**
(45) Date of publication and mention of the grant of the patent: **29.01.2025**
(21) Application number: 21820728.0
(22) Date of filing: 06.12.2021
(51) Int. Cl.: B62D 25/12, E05D 5/04, E05D 5/06, B60K 11/08, E05D 5/02

(54) **A MOTOR VEHICLE**
KRAFTFAHRZEUG
VÉHICULE AUTOMOBILE

(30) Priority: 07.12.2020 NL 2027057
(43) Date of publication of application: 11.10.2023
(73) Proprietor: DAF Trucks N.V., 5643 TW Eindhoven (NL)
(72) Inventor: SINTENIE, Sjoerd Jacco, 5643 TW Eindhoven (NL); KLEES, Frans, 5643 TW Eindhoven (NL); VAN DEN BEUCKEN, Gerardus Theodorus Aldegonda, 5643 TW Eindhoven (NL)
(74) Representative: V.O.
(86) International application number: PCT/NL2021/050738
(87) International publication number: WO 2022/124887

(56) References cited:
- WO-A1-01/98132
- DE-C1- 19 809 778
- KR-A- 20040 023 977
- SE-C2- 519 837
- US-A- 5 004 062

## Description

The invention relates to a motor vehicle, in particular a heavy goods vehicle, comprising a driver cabin and a front grille pivotal with regard to the driver cabin, the front grille facing forwards in the vehicle's normal direction of movement, the driver cabin further comprising a cabin side section provided with a door mounted to the driver cabin around a door hinge for pivoting the door around a vertical door pivot axis.

Such a motor vehicle is for example known from SE519837C2. In this known motor vehicle an element of the door hinge is attached to the cabin and an element of a further hinge is attached to the front grille. The further hinge additionally comprises a part which is mounted on the element of the door hinge which is attached to the cabin, which part is arranged as a mounting bracket comprising a bushing unit and holes for fastening means for fastening the mounting bracket to the element of the door hinge which is attached to the cabin. The bushing unit comprises an elastic bushing for compensating mounting variations which occur in the element of the door hinge attached to the cabin. Although such an elastic bushing compensates for mounting variations and thus the time for mounting the further hinge is minimized, there is a risk that additional geometrical imperfections are introduced due to the required gap between the door and the front grille and due to the tolerances as a result of the manufacturing and assembly process of the various components and tolerances coming from the various hinges. Such additional geometrical imperfections can lead to too large gaps which can lead to air-drag which negatively influences fuel consumption. In addition, such additional geometrical imperfections can lead to disturbance of the flushness between the door and the front grille, in other words height differences between the door panel and the front grille can be introduced, also leading to air-drag thereby negative influencing fuel consumption.

It is thus an object of the invention to provide a motor vehicle with a pivotal front grille and a pivotal door mounted to the driver cabin around a door hinge in which the gaps between the front grille and the door as well as the flushness of the front grille and the door are controlled such so that they do not negatively influence the aerodynamic properties of the motor vehicle.

According to the invention at least one of the objects is obtained by providing a motor vehicle, in particular a heavy goods vehicle, comprising a driver cabin and a front grille pivotal with regard to the driver cabin, the front grille facing forwards in the vehicle's normal direction of movement, the driver cabin further comprising a cabin side section provided with a door mounted to the driver cabin around a door hinge for pivoting the door around a vertical door pivot axis; characterized in that the front grille comprises a central front hatch panel pivotally attached to the cabin around a horizontal pivot axis and a side front grille corner piece positioned on a side of the central front hatch panel, the side front grille corner piece extending between the central front hatch panel and the door, the side front grille corner piece being pivotally connected to the cabin for pivoting around a vertical corner piece pivot axis, in that the door hinge comprises an upper door hinge part and a lower door hinge part, each of the upper and lower door hinge parts comprises a door hinge element fastened to the cabin, a corner piece hinge connected to the door hinge element and an angled bracket plate positioned between the corner piece hinge and the side front grille corner piece, the angled bracket plate having a first flange connected to the side front grille corner piece and a second flange transverse to the first flange, said second flange being connected to the corner piece hinge, the first flange comprising first through holes for receiving first connection means for connecting the angled bracket plate to the side front grille corner piece, the second flange comprising second through holes for receiving second connection means for connecting the angled bracket plate to the corner piece hinge, and in that the first through holes are oversized with regard to the first connection means and the second through holes are oversized with regard to the second connection means. By such an angled bracket plate having oversized through holes for receiving connection means, despite the tolerances as a result of the manufacturing and assembly process of the various components and tolerances coming from the various hinges the side front grille corner piece can be mounted such that a relatively controlled gap and a good flushness condition between a closed side front grille corner piece and a closed door can be achieved in a relatively easy manner, thereby improving the aerodynamic properties which is beneficial for fuel economy.

In an embodiment of a motor vehicle according to the invention the first flange is a vertical flange and the second flange is a horizontal flange. Alternatively, the first flange is a horizontal flange and the second flange is a vertical flange.

In an embodiment of a motor vehicle according to the invention the oversized first through holes are rounded rectangles. By using rounded rectangles as oversized first through holes tolerances in two direction of a plane defined by the side front grille corner piece can be compensated for for achieving a relatively controlled gap and a good flushness condition between a closed side front grille corner piece and a closed door.

In a further embodiment of a motor vehicle according to the invention the oversized second through holes comprise one circular second through hole and one slotted second through hole having a longitudinal axis. By using such a circular second through hole and such a slotted second through hole tolerances in a direction transverse to the plane defined by the side front grille corner piece can be compensated for for achieving a relatively controlled gap and a good flushness condition between a closed side front grille corner piece and a closed door.

In a still further embodiment of a motor vehicle according to the invention the first and the second connection means are clamping screws. By using clamping screws the side front grille corner piece can be correctly connected to the angled bracket plate and the angled bracket plate can be connected correctly to the corner piece hinge in an easy and durable manner.

In another embodiment of a motor vehicle according to the invention the side front grille corner piece is releasably connectable to the central front hatch panel, the side front grille corner piece and the central front hatch panel comprising cooperating snap fixture elements for releasable connection to each other. By such releasable connection of the side front grille corner piece to the central front hatch panel the gap and the flushness therebetween is controlled. Although this gap is less critical to aerodynamic performances this gap needs to be controlled too for aesthetic reasons, as the left and right hand side gap with regard to the central front hatch panel must appear even.

In a further embodiment of a motor vehicle according to the invention the side front grille corner piece is semi-flexible, the side front grille corner piece preferably being an injection molded side front grille corner piece. By using a semi-flexible side front grille corner piece amongst other things a good fit condition between the side front grille corner piece and the central front hatch panel can be obtained.

The invention will be further explained with reference to the Figures, in which a non-limiting exemplary embodiment of a vehicle according to the invention is shown:
Fig. 1 schematically in perspective shows an embodiment of a motor vehicle according to the invention with the central front hatch panel, the side front grille corner piece and the door in a closed position;
Fig. 2 schematically in perspective shows the embodiment of the motor vehicle as shown in Fig. 1 with the central front hatch panel, the side front grille corner piece and the door in an open position;
Fig. 3 schematically in perspective shows the door and the side front grille corner piece of Fig. 1 on a larger scale;
Fig. 4A schematically in perspective shows the inner surface of the side front grille corner piece of Fig. 3 with the angled bracket plate attached thereto and a part of the corner piece hinge;
Fig. 4B schematically in perspective shows the inner surface of the side front grille corner piece of Fig. 3 with the angled bracket plate detached therefrom;
Figs. 5A-5C schematically shows the angled bracket piece in several views;
Fig. 6 schematically in a top view shows the door and the side front grille corner piece with the door hinge and the corner piece hinge, the corner piece hinge in this embodiment comprising two linkage arm plates;
Fig. 7 schematically in perspective shows the embodiment as shown in Fig. 6; and
Fig. 8 schematically in top view shows the embodiment of the motor vehicle of Figs. 1 and 2 indicating the cooperating snap fixture elements for releasable connection of the side front grille corner piece and the central front hatch panel to each other.

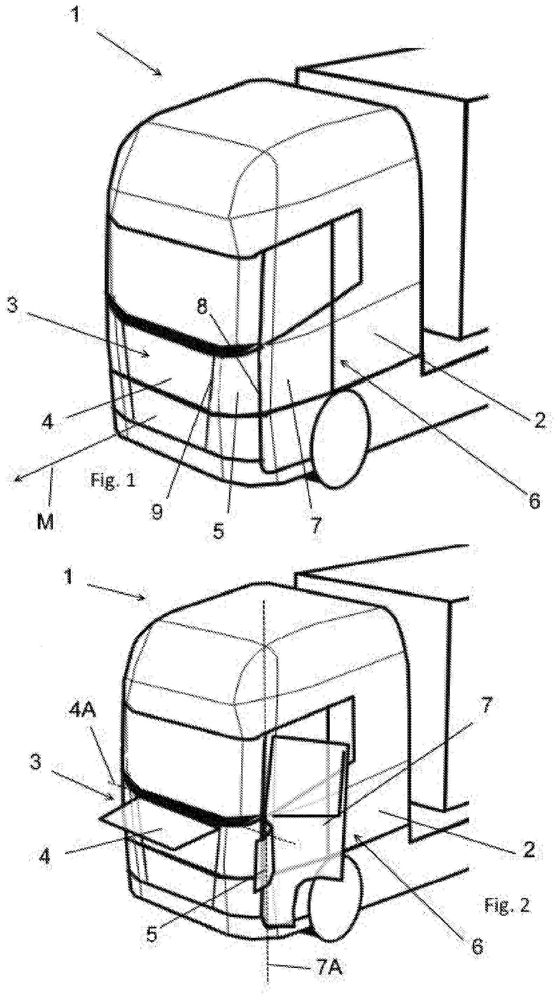

In Figs. 1 and 2 an example of an embodiment of a motor vehicle according to the invention, in the shown embodiment a heavy goods vehicle 1, is schematically shown. The heavy goods vehicle 1 comprises a driver cabin 2 and a front grille 3. The front grille 3 comprises a central front hatch panel 4 pivotally attached to the cabin 2 around a horizontal pivot axis 4A (Fig. 2) and a side front grille corner piece 5 positioned on a side of the central front hatch panel 4. The driver cabin 2 further comprises a cabin side section 6 provided with a door 7 mounted to the driver cabin 2 around a door hinge for pivoting the door 7 around a vertical door pivot axis 7A. The side front grille corner piece 5 extends between the central front hatch panel 4 and the door 7 and is semi-flexible, preferably the side front grille corner piece 5 is an injection molded side front grille corner piece 5. The side front grille corner piece 5 is pivotally attached with regard to the driver cabin 2. As indicated in Fig. 1 the front grille 3 faces forwards in the vehicle's normal direction of movement M.

In Fig. 1 the situation is shown in which the central front hatch panel 4, the side front grille corner piece 5 and the door 7 are in a closed position, while in Fig. 2 the situation is shown in which the central front hatch panel 4, the side front grille corner piece 5 and the door 7 are in an open position. The invention will be further described below only with respect to one cabin side section 6 of the cabin 2 (i.e. the driver's or the left side) and thus with respect to only one door 7, but it will be clear that the invention also applies to the other cabin side section of the cabin 2 (the co-driver's side or the right side).

The present invention concerns a heavy goods vehicle 1 in which the gap 8 between the side front grille corner piece 5 and the door 7 as well as the gap 9 between the central front hatch panel 4 and the side front grille corner piece 5 as well as the flushness of these components are controlled such so that they do not negatively influence the aerodynamic properties of the heavy goods vehicle 1.

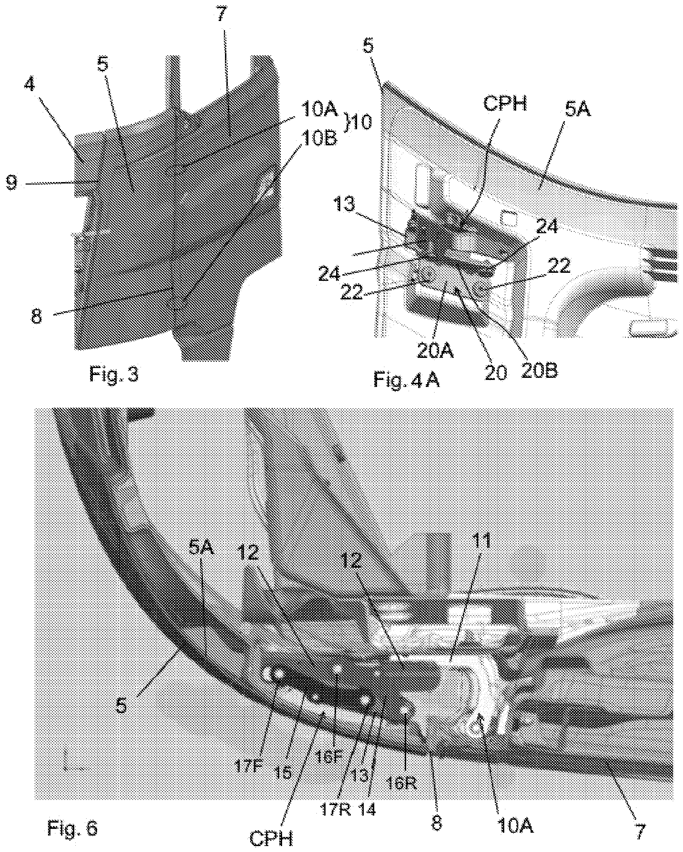

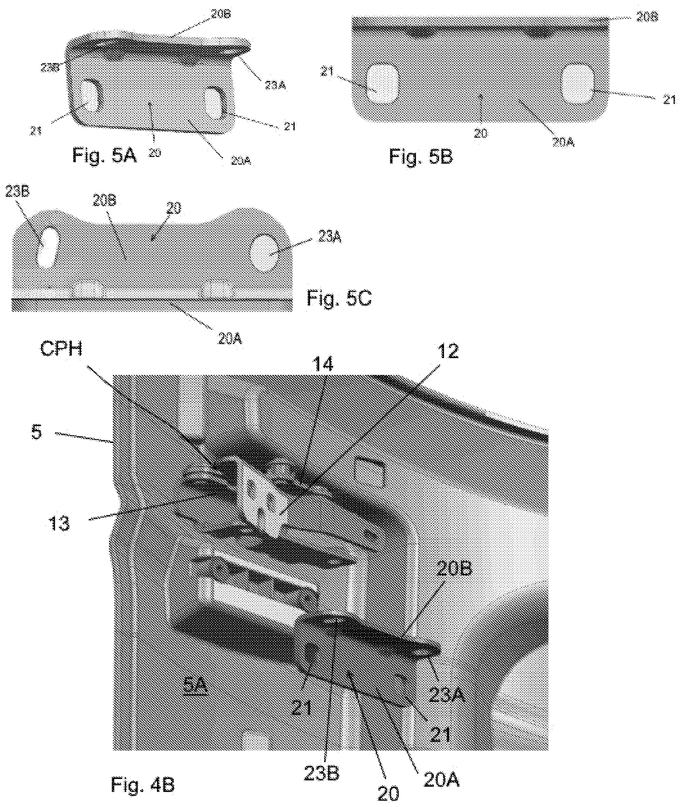

As indicated in Fig. 3 the door hinge 10 on which the door 7 is mounted to the driver cabin 2 comprises an upper door hinge part 10A and a lower door hinge part 10B. Since the upper and lower door hinge part 10A, 10B are identical in construction, below only the upper door hinge part 10A will be described in detail with regard to the embodiment as shown in Figures 4 to 7. Before mounting on the door hinge 10 the side front grille corner piece 5 and the door 7 are pre-aligned in any known manner, for example by means of a jig.

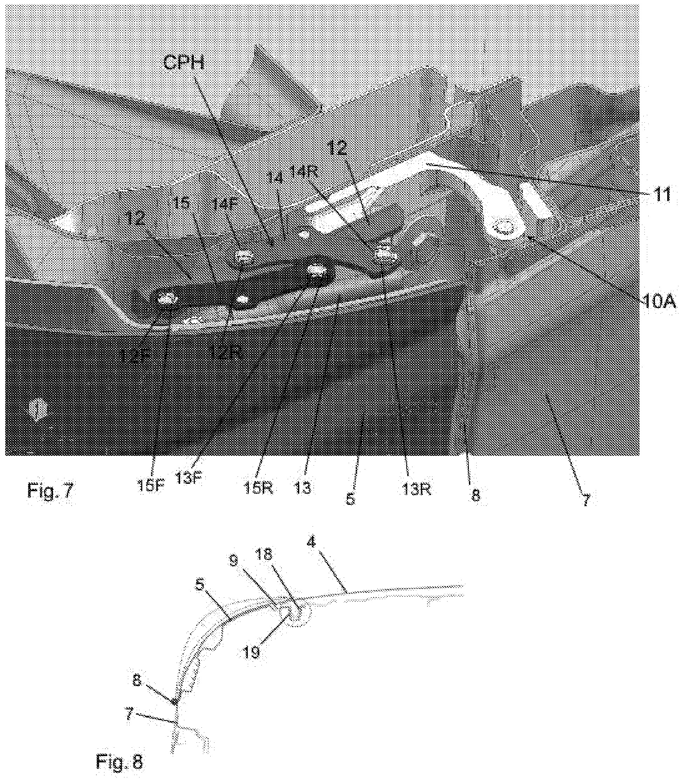

The upper door hinge part 10A comprises a door hinge element 11 fastened to the cabin 2 and a corner piece hinge CPH fastened to the door hinge element 11, as indicated in Figs. 6 and 7.

In order to mount the side front grille corner piece 5 to the door hinge 10A the corner piece hinge CPH is positioned and attached to the door hinge element 11. To elucidate this, the corner piece hinge CPH is shown in Fig. 4B (without the door hinge element 11) and an angled bracket plate 20 is positioned between the corner piece hinge CPH and the side front grille corner piece 5 to compensate for all introduced tolerances. The angled bracket plate 20 is then attached to an inner surface 5A of the side front grille corner piece 5 and attached to the corner piece hinge CPH as shown in Fig. 4A.

A detailed view of the angled bracket plate 20 is shown in Figures 5A-5C. The angled bracket plate 20 has a first, vertical flange 20A connected to inner surface 5A of the side front grille corner piece 5 and a second, horizontal flange 20B connected to the corner piece hinge CPH. The vertical flange 20A comprises first through holes 21 for receiving first connection means 22 for connecting the angled bracket plate 20 to the side front grille corner piece 5. The horizontal flange 20B comprises second through holes 23A, 23B for receiving second connection means 24 for connecting the angled bracket plate 20 to the corner piece hinge CPH. The first through holes 21 are oversized with regard to the first connection means 22 and the second through holes 23A, 23B are oversized with regard to the second connection means 24. In the embodiment shown in Figs. 5A-5C the oversized first through holes 21 are rounded rectangles, and of the oversized second through holes 23A, 23B one is a circular second through hole 23A and one is slotted second through hole 23B. As indicated in Fig. 4A the first and the second connection means 22, 24 are clamping screws. By such an angled bracket plate 20 having oversized through holes 21, 23A, 23B for receiving the clamping screws 22, 24 relatively controlled gaps 8, 9 and a good flushness condition between the closed side front grille corner piece 5 and the closed door 7 can be achieved in a relatively easy manner, thereby improving the aerodynamic properties which is beneficial for fuel economy.

Please note that in an alternative embodiment the first flange connected to the side front grille corner piece can be a horizontal flange and the second flange connected to the corner piece hinge can be a vertical flange.

With regard to Figures 6 and 7 one embodiment of a corner piece hinge CPH will be described in detail. It will be clear that the invention is not restricted to this embodiment of a corner piece hinge but that other corner piece hinges can be used. The described embodiment of the corner piece hinge CPH is advantageous in view of the limited space available between the cabin 2 and the side front grille corner piece 5, and provides a stable and correct opening and closing of the side front grille corner piece 5.

The corner piece hinge CPH comprises a connection plate 12 connected to the door hinge element 11. The connection of the connection plate 12 to the door hinge element 11 can be realized by any means known, such as by screws or through welding. The connection plate 12 has a rear connection plate hole 12R and a front connection plate hole 12F (Fig. 7) vertically extending through the connection plate 12. An upper base plate 13 of the corner piece hinge CPH is fastened to the horizontal flange 20B of the angled bracket plate 20 fastened to the inner surface 5A of the side front grille corner piece 5 (see also Fig. 4). The upper base plate 13 has a rear base plate hole 13R and a front base plate hole 13F which vertically extend through the base plate 13.

The corner piece hinge CPH further comprises a rear linkage arm plate 14 having a rear rear linkage arm plate hole 14R and a front rear linkage arm plate hole 14F is pivotally attached between the upper base plate 13 and the connection plate 12 by a rear hinge 16R extending through the rear rear linkage arm plate hole 14R and the rear base plate hole 13R and a front hinge 16F extending through the front rear linkage arm plate hole 14F and the rear connection plate hole 12R.

A front linkage arm plate 15 of the corner piece hinge CPH is provided with a rear front linkage arm plate hole 15R and a front front linkage arm plate hole 15F is pivotally attached between the upper base plate 13 and the connection plate 12 by a rear hinge 17R extending through the rear front linkage arm plate hole 15R and the front base plate hole 13F and a front hinge 17F extending through the front front linkage arm plate hole 17F and the front connection plate hole 13F. In this manner the front and a rear linkage arm plates 14, 15 form a 4-way linkage connecting the side front grille corner piece 5 to the door hinge 10.

As indicated in Fig. 8 the side front grille corner piece 5 is releasably connectable to the central front hatch panel 4 for example by means of cooperating snap fixture elements 18, 19. By such releasable connection of the side front grille corner piece 5 to the central front hatch panel 4 the gap 9 and the flushness therebetween is controlled. In particular since the side front grille corner piece 5 is semi-flexible any additional tolerance introduced by the corner piece hinge CPH is mitigated by the cooperating snap fixture elements 18, 19 which thus provide a good fit condition between the side front grille corner piece 5 and the central front hatch panel 4.

## Claims

1. A motor vehicle, in particular a heavy goods vehicle (1), comprising a driver cabin (2) and a front grille (3) pivotal with regard to the driver cabin (2), the front grille (3) facing forwards in the vehicle's normal direction of movement (M), the driver cabin (2) further comprising a cabin side section (6) provided with a door (7) mounted to the driver cabin (2) around a door hinge (10) for pivoting the door (7) around a vertical door pivot axis (7A); **characterized in that** the front grille (3) comprises a central front hatch panel (4) pivotally attached to the cabin (2) around a horizontal pivot axis (4A) and a side front grille corner piece (5) positioned on a side of the central front hatch panel (4), the side front grille corner piece (5) extending between the central front hatch panel (4) and the door (7), the side front grille corner piece (5) being pivotally connected to the cabin (2) for pivoting around a vertical corner piece pivot axis, **in that** the door hinge (10) comprises an upper door hinge part (10A) and a lower door hinge part (10B), each of the upper and lower door hinge parts (10A, 10B) comprises a door hinge element (11) fastened to the cabin (2), a corner piece hinge (CPH) connected to the door hinge element (11) and an angled bracket plate (20) positioned between the corner piece hinge (CPH) and the side front grille corner piece (5), the angled bracket plate (20) having a first flange connected to the side front grille corner piece (5) and a second flange transverse to the first flange, said second flange being connected to the corner piece hinge (CPH), the first flange comprising first through holes for receiving first connection means (22) for connecting the angled bracket plate (20) to the side front grille corner piece (5), the second flange comprising second through holes (23A, 23B) for receiving second connection means (24) for connecting the angled bracket plate (20) to the corner piece hinge (CPH), and **in that** the first through holes (21) are oversized with regard to the first connection means (22) and the second through holes (23A, 23B) are oversized with regard to the second connection means (24).

2. A motor vehicle according to claim 1, wherein the first flange is a vertical flange (20A) and the second flange is a horizontal flange (20B) or wherein the first flange is a horizontal flange and the second flange is a vertical flange.

3. A motor vehicle according to claim 1 or 2, wherein the oversized first through holes (21) are rounded rectangles.

4. A motor vehicle according to claim 1, 2 or 3, wherein the oversized second through holes (23A, 23B) comprise one circular second through hole (23A) and one slotted second through hole (23B).

5. A motor vehicle according to any one of the preceding claims, wherein the first and the second connection means (22, 24) are clamping screws.

6. A motor vehicle according to any one of the preceding claims, wherein the side front grille corner piece (5) is releasably connectable to the central front hatch panel (4), the side front grille corner piece (5) and the central front hatch panel (4) comprising cooperating snap fixture elements (18, 19) for releasable connection to each other.

7. A motor vehicle according to any one of the preceding claims, wherein the side front grille corner piece (5) is semi-flexible, the side front grille corner piece (5) preferably being an injection molded side front grille corner piece (5).

## Patentansprüche

1. Kraftfahrzeug, insbesondere ein Schwerlastfahrzeug (1), mit einer Fahrerkabine (2) und einem in Bezug auf die Fahrerkabine (2) schwenkbaren Frontgrill (3), wobei der Frontgrill (3) in der normalen Bewegungsrichtung (M) des Fahrzeugs vorwärts gewandt ist, wobei die Fahrerkabine (2) ferner einen Kabinenseitenabschnitt (6) aufweist, versehen mit einer an der Fahrerkabine (2) um ein Türscharnier (10) montierten Tür (7) zum Schwenken der Tür (7) um eine vertikale Türschwenkachse (7A); **dadurch gekennzeichnet, dass** der Frontgrill (3) eine an der Kabine (2) um eine horizontale Schwenkachse (4A) schwenkbar angebrachte mittlere Frontklappenplatte (4) und ein an einer Seite der mittleren Frontklappenplatte (4) positioniertes seitliches Frontgrilleckstück (5) aufweist, wobei sich das seitliche Frontgrilleckstück (5) zwischen der mittleren Frontklappenplatte (4) und der Tür (7) erstreckt, wobei das seitliche Frontgrilleckstück (5) zum Schwenken um eine vertikale Eckstückschwenkachse schwenkbar mit der Kabine (2) verbunden ist, dadurch, dass das Türscharnier (10) ein oberes Türscharnierteil (10A) und ein unteres Türscharnierteil (10B) aufweist, wobei jedes von dem oberen und unteren Türscharnierteilen (10A, 10B) ein an der Kabine (2) befestigtes Türscharnierelement (11), ein mit dem Türscharnierelement (11) verbundenes Eckstückscharnier (CPH) und eine zwischen dem Eckstückscharnier (CPH) und dem seitlichen Frontgrilleckstück (5) positionierte abgewinkelte Halterungsplatte (20) aufweist, wobei die abgewinkelte Halterungsplatte (20) einen ersten Flansch, verbunden mit dem seitlichen Frontgrilleckstück (5), und einen zweiten Flansch quer zum ersten Flansch aufweist, wobei der zweite Flansch mit dem Eckstückscharnier (CPH) verbunden ist, wobei der erste Flansch erste Durchgangslöcher zum Aufnehmen erster Verbindungsmittel (22) zum Verbinden der abgewinkelten Halterungsplatte (20) mit dem seitlichen Frontgrilleckstück (5) aufweist und der zweite Flansch zweite Durchgangslöcher (23A, 23B) zum Aufnehmen zweiter Verbindungsmittel (24) zum Verbinden der abgewinkelten Halterungsplatte (20) mit dem Eckstückscharnier (CPH) aufweist, und dadurch, dass die ersten Durchgangslöcher (21) in Bezug auf das erste Verbindungsmittel (22) übergroß sind und die zweiten Durchgangslöcher (23A, 23B) in Bezug auf das zweite Verbindungsmittel (24) übergroß sind.

2. Kraftfahrzeug nach Anspruch 1, wobei der erste Flansch ein vertikaler Flansch (20A) ist und der zweite Flansch ein horizontaler Flansch (20B) ist, oder wobei der erste Flansch ein horizontaler Flansch ist und der zweite Flansch ein vertikaler Flansch ist.

3. Kraftfahrzeug nach Anspruch 1 oder 2, wobei die übergroßen ersten Durchgangslöcher (21) abgerundete Rechtecke sind.

4. Kraftfahrzeug nach Anspruch 1, 2 oder 3, wobei die übergroßen zweiten Durchgangslöcher (23A, 23B) ein kreisförmiges zweites Durchgangsloch (23A) und ein schlitzförmiges zweites Durchgangsloch (23B) aufweisen.

5. Kraftfahrzeug nach einem der vorstehenden Ansprüche, wobei das erste und das zweite Verbindungsmittel (22, 24) Klemmschrauben sind.

6. Kraftfahrzeug nach einem der vorstehenden Ansprüche, wobei das seitliche Frontgrilleckstück (5) lösbar verbindbar ist mit der mittleren Frontklappenplatte (4), dem seitlichen Frontgrilleckstück (5) und der mittleren Frontklappenplatte (4), mit zusammenwirkenden Rastbefestigungselemente (18, 19) zur lösbaren Verbindung miteinander.

7. Kraftfahrzeug nach einem der vorstehenden Ansprüche, wobei das seitliche Frontgrilleckstück (5) halbflexibel ist, wobei das seitliche Frontgrilleckstück (5) vorzugsweise ein spritzgegossenes seitliches Frontgrilleckstück (5) ist.

## Revendications

1. Véhicule à moteur, en particulier véhicule poids lourd (1), comprenant une cabine du conducteur (2) et une calandre avant (3) pivotante par rapport à la cabine du conducteur (2), la calandre avant (3) étant orientée vers l'avant dans la direction de déplacement normale (M) du véhicule, la cabine du conducteur (2) comprenant en outre une section latérale de cabine (6) pourvue d'une porte (7) montée sur la cabine du conducteur (2) autour d'une charnière de porte (10) pour faire pivoter la porte (7) autour d'un axe de pivot de porte vertical (7A) ; **caractérisé en ce que** la calandre avant (3) comprend un panneau de trappe avant central (4) attaché de manière pivotante à la cabine (2) autour d'un axe de pivot horizontal (4A) et une pièce d'angle de calandre avant latérale (5) positionnée sur un côté du panneau de trappe avant central (4), la pièce d'angle de calandre avant latérale (5) s'étendant entre le panneau de trappe avant central (4) et la porte (7), la pièce d'angle de calandre avant latérale (5) étant reliée de manière pivotante à la cabine (2) pour pivoter autour d'un axe de pivot de pièce d'angle vertical, **en ce que** la charnière de porte (10) comprend une partie de charnière de porte supérieure (10A) et une partie de charnière de porte inférieure (10B), chacune des parties de charnière de porte supérieure et inférieure (10A, 10B) comprend un élément de charnière de porte (11) accroché à la cabine (2), une charnière de pièce d'angle (CPH) reliée à l'élément de charnière de porte (11) et une plaque de support coudée (20) positionnée entre la charnière de pièce d'angle (CPH) et la pièce d'angle de calandre avant latérale (5), la plaque de support coudée (20) ayant une première bride reliée à la pièce d'angle de calandre avant latérale (5) et une seconde bride transversale à la première bride, ladite seconde bride étant reliée à la charnière de pièce d'angle (CPH), la première bride comprenant des premiers trous traversants pour recevoir des premiers moyens de connexion (22) pour relier la plaque de support coudée (20) à la pièce d'angle de calandre avant latérale (5), la seconde bride comprenant des seconds trous traversants (23A, 23B) pour recevoir des seconds moyens de connexion (24) pour relier la plaque de support coudée (20) à la charnière de pièce d'angle (CPH), et **en ce que** les premiers trous traversants (21) sont surdimensionnés par rapport aux premiers moyens de connexion (22) et les seconds trous traversants (23A, 23B) sont surdimensionnés par rapport aux seconds moyens de connexion (24).

2. Véhicule à moteur selon la revendication 1, dans lequel la première bride est une bride verticale (20A) et la seconde bride est une bride horizontale (20B) ou dans lequel la première bride est une bride horizontale et la seconde bride est une bride verticale.

3. Véhicule à moteur selon la revendication 1 ou 2, dans lequel les premiers trous traversants surdimensionnés (21) sont des rectangles arrondis.

4. Véhicule à moteur selon la revendication 1, 2 ou 3, dans lequel les seconds trous traversants surdimensionnés (23A, 23B) comprennent un second trou traversant circulaire (23A) et un second trou traversant fendu (23B).

5. Véhicule à moteur selon l'une quelconque des revendications précédentes, dans lequel les premier et second moyens de connexion (22, 24) sont des vis de serrage.

6. Véhicule à moteur selon l'une quelconque des revendications précédentes, dans lequel la pièce d'angle de calandre avant latérale (5) peut être connectée de manière amovible au panneau de trappe avant central (4), la pièce d'angle de calandre avant latérale (5) et le panneau de trappe avant central (4) comprenant des éléments de fixation à encliquetage coopérants (18, 19) pour une connexion amovible l'un à l'autre.

7. Véhicule à moteur selon l'une quelconque des revendications précédentes, dans lequel la pièce d'angle de calandre avant latérale (5) est semi-flexible, la pièce d'angle de calandre avant latérale (5) étant de préférence une pièce d'angle de calandre avant latérale (5) moulée par injection.
